# EUROPÄISCHE PATENTSCHRIFT

(11) **EP 1 239 663 B1**
(45) Veröffentlichungstag und Bekanntmachung des Hinweises auf die Patenterteilung: **01.12.2004**
(21) Anmeldenummer: 02003936.8
(22) Anmeldetag: 22.02.2002
(51) Int. Cl.: H04N 1/60, H04N 1/407

(54) **Verfahren und System zum Anpassen der Tonstufenwiedergabe zwischen zwei Ausgabegeräten**
Method and system for matching tonal gradation between two output devices
Procédé et système pour mettre en correspondance la gradation de deux dispositifs de sortie

(30) Priorität: 22.02.2001 US 791935
(43) Veröffentlichungstag der Anmeldung: 11.09.2002
(73) Patentinhaber: Eastman Kodak Company, Rochester, New York 14650 (US)
(72) Erfinder: Housel, Edward M., Rochester, NY 14624 (US)
(74) Vertreter: Haile, Helen Cynthia

(56) Entgegenhaltungen:
- EP-A- 0 454 085
- EP-A- 0 658 043
- WO-A-93/20648
- US-A- 5 260 806
- US-A- 5 537 516

## Beschreibung

Die vorliegende Erfindung betrifft elektrofotografische Markierungsvorrichtungen und -systeme. Insbesondere betrifft die vorliegende Erfindung Verfahren und Vorrichtungen zur Anpassung der Ausgabe einer Markierungsvorrichtung an die einer anderen Markierungsvorrichtung.

Eine typische Markierungsvorrichtung, wie ein Drucker, dient dazu, Ausgaben eines Computers in Reproqualität zu erstellen. Der Computer oder Client umfasst im Allgemeinen ein Anwendungsprogramm, das dazu verwendet wird, um ein auszugebendes Bild zu erzeugen oder zu suchen. Das Anwendungsprogramm sendet das Bild an den Gerätetreiber, der als Schnittstelle zwischen dem Client und der Markierungsvorrichtung dient. Der Gerätetreiber codiert das Bild in Form einer Seitenbeschreibungssprache (Page Description Language / PDL) und sendet das codierte Bild an die Markierungsvorrichtung.

Zahlreiche herkömmliche Markierungsvorrichtungen beinhalten einen Rasterbildprozessor und eine Markierungseinheit. Der Rasterbildprozessor empfängt das PDL-codierte Bild von dem Gerätetreiber des Client und setzt das Bild in ein Raster oder Gitter aus Linien um. Jede Linie umfasst eine Reihe von Pixeln, die sich nach Bedarf ein- oder ausschalten lassen, um den Inhalt des Bildes darzustellen. Der Rasterbildprozessor sendet den gerasterten Pixelstrom an die Markierungseinheit zur Ausgabe auf einem Empfangselement.

Herkömmliche Markierungsprozesse sind insofern begrenzt, als dass sie keinen Tonverlauf, also kein kontinuierliches Spektrum von Tonstufen, innerhalb eines Bildes erstellen können. Stattdessen werden modulierte Muster zur Simulation unterschiedlicher Tonstufen verwendet. Eine gängige Form der Modulation ist die Verwendung von Rastern. Beispielsweise verwenden zahlreiche typische Schwarzweißdrucker Raster, um eine Vielzahl von Graustufen zu erzeugen, etwa 30% weiß oder 60% weiß. Die Verwendung von Rastern verlangt eine Aufteilung des gerasterten Bildes in Rasterzellen, von denen jede eine feste Anzahl von Pixeln enthält. Ein kontinuierliches Tonspektrum, also ein Tonverlauf, lässt sich also näherungsweise erzeugen, indem ein bestimmter Prozentsatz der Pixel in jeder Rasterzelle eingeschaltet wird. Theoretisch lässt sich eine 50% Graustufe erreichen, indem man 50% der Pixel in einer Rasterzelle auf einem Schwarzweißdrucker einschaltet. In der Praxis weichen die von verschiedenen Markierungsvorrichtungen tatsächlich erzeugten Graustufen etwas von diesem Ideal ab. Zu den drei Faktoren, die üblicherweise die Erstellung eines Pixels durch eine gegebene Markierungsvorrichtung bestimmen, zählen der Rasterwinkel, die Punktgröße und die Punktfrequenz (d.h. die Anzahl der Linien pro Zoll). Abweichungen unter diesen Faktoren führen oft dazu, dass einige Markierungsvorrichtungen zu dunkle Ausgaben und andere Markierungsvorrichtungen zu helle Ausgaben erzeugen. Ein von einer bestimmten Markierungsvorrichtung erzeugtes 50% Raster kann daher eine Graustufe ergeben, die geringfügig über oder unter 50% weiß liegt.

Geringfügige Abweichungen von dem idealen Standardspektrum an Graustufen sind in vielen Fällen tolerierbar. Es gibt jedoch Fälle, in denen die Abweichung zwischen den Ausgaben aus unterschiedlichen Markierungsvorrichtungen ein Problem darstellt. Beispielsweise lässt sich ein einzelner Druckauftrag in Teilen herstellen, wobei unterschiedliche Teile auf unterschiedlichen Druckern erstellt werden. In diesem Fall kann es wünschenswert sein, die Ausgaben der verschiedenen Drucker aneinander oder an einen objektiven Standard anzupassen, wodurch in der Ausgabe des gesamten Druckauftrags eine Durchgängigkeit gewährleistet ist.

Eine andere Anwendung betrifft das sogenannte Proofen, bei dem auf einer zweiten Druckvorrichtung ein Druck erzeugt wird, der in seinen Farbeigenschaften möglichst genau dem einer ersten Druckvorrichtung entspricht, um eine Ausgabe der ersten Druckvorrichtung mit dem gewünschten Ergebnis vergleichen zu können. Das Proofing wird verwendet, um das Herstellen von Druckformen für die erste Vorrichtung zu vermeiden, bis die Ausgabe der Druckvorrichtung nicht den Anforderungen entspricht. Der Druck eines Druckauftrages, für den geprooft wird, erfolgt aber in der Regel nur auf der einen Maschine, für die geprooft wurde. In der PCT Anmeldung WO 93/20648 wird ein Verfahren beschrieben, wie ein erstes Set digitaler Information die ein Farbbild definieren, die für ein erstes Druckersystem angepasst wurden, in ein zweites Set digitaler Informationen für ein zweites Drucksystem umgerechnet werden. Dabei handelt es sich bei dem ersten Drucksystem um die Druckvorrichtung, mit der der Druckauftrag bearbeitet werden soll und bei dem zweiten Drucksystem um die Druckvorrichtung, die den Proof macht. Hierfür werden von beiden Druckvorrichtungen spezielle Druckmuster angefertigt, diese Druckmuster vermessen und aus den Messergebnissen eine vierdimensionale Nachschlagetabelle generiert. Die vier Dimensionen ergeben sich dabei durch die vier Farben Gelb, Cyan, Magenta und Schwarz. Diese vierdimensionale Nachschlagetabelle wird dann im Anschluß verwendet, um die digitalen Informationen, die ein Farbbild definieren und für ein erstes Drucksystem angepasst wurden für das zweite Drucksystem umzurechnen.

Es gibt Verfahren zur Kalibrierung einer Markierungsvorrichtung zur Kompensation einer Abweichung von dem idealen Standardspektrum an Tonstufen. Vorhandene Verfahren umfassen typischerweise das Kalibrieren der Tonübertragungsfunktion einer Markierungsvorrichtung zur Anpassung an einen idealen, objektiven Standard. Die Tonübertragungsfunktion ist die Beziehung zwischen einer durch die Clientanwendung angegebenen Tonstufe und der resultierenden Rasterstufe, bei der es sich um den Prozentsatz von Pixeln handelt, die in einer Rasterzelle eingeschaltet sind. Diese Funktion lässt sich einstellen, um eine mögliche Abweichung von dem Idealspektrum an Ausgabetonstufen auszugleichen. Auf diese Weise kann sich die Markierungsvorrichtung einer idealen 1:1-Standardbeziehung zwischen einer von einem Client angeforderten Tonstufe und der resultierenden Ausgabetonstufe nähern.

Die Kalibrierung einer Markierungsvorrichtung erfolgt üblicherweise mit einem Densitometer oder Dichtemesser. Ein Densitometer ist ein Instrument, das die "Dichte" einer Ausgabetonstufe misst. Beispielsweise ist die Dichte einer von einem Schwarzweißdrucker ausgegebenen Graustufe der Prozentsatz der Fläche, die schwarz ist. Ein hoher Prozentsatz an schwarzer Fläche ergibt eine höhere Dichte und eine insgesamt dunklere Graustufe. Dichtemesser lassen sich auch verwenden, um die Dichte verschiedener Ausgabetonstufen zu messen und Abweichungen von dem Idealstandard zu ermitteln. Alternativ hierzu können Proben von Ausgabetonstufen mit Vorlagen verglichen werden, die Standardmuster erhalten, von denen bekannt ist, dass sie genau zu einem Satz von Idealtonstufen passen. In jedem dieser Fälle lassen sich Unterschiede zwischen dem ausgegebenen und dem idealen Spektrum an Tonstufen ermitteln. Sobald diese Unterschiede ermittelt worden sind, lassen sich entsprechende Einstellungen an der Tonübertragungsfunktion vornehmen, um die Markierungsvorrichtung auf den Idealstandard zu kalibrieren. Diese Verfahren sind nach dem Stand der Technik bekannt.

Das US-amerikanische Patent US 5,260,806 offenbart ein weiteres Verfahren, das das Proofing betrifft. Hier wird eine Übertragungsfunktion für die Reproduktionsumstände, wie zum Beispiel die gemessene Dichte eines Druckmusters hergestellt und anhand dieser eine Mehrzahl von modifizierten Ausgaben generiert, unter denen ein Bediener die auswählen kann, die seinen Wünschen entspricht, sei es, dass sie dem exakten Zustand besonders gut entsprechen, oder einer gewünschten Entfrerndung der Ausgabe.

In der US 5,537,516 wird ein weiteres Verfahren zur Kalibration der Farbausgabe offenbart, vermittels dessen die Ausgabe von mehreren Druch vorrichtungen eine Familie standardisiert wird.

Hierbei wird die Ausgade einer ersten, Kalibrierter Druckers mithilfe von aneinander augepassten Scannern mit des Ausgade eines zweiter Druckers verglichen und mittels aus Vergleichs information gewonnenen Druckerkalibrationskurven angepasst.

Bekannte Kalibrierverfahren erfordern jedoch ein objektives Maß des idealen Tonstufenspektrums. Beispielsweise können Spezialgeräte, wie ein Densitometer, dazu vorgesehen sein, die wahre Dichte einer als Probe erstellten Ausgabetonstufe zu bestimmen. Zudem wird von einem geschulten Benutzer normalerweise verlangt, dass er die mit dem Densitometer ermittelten Ergebnisse genau beurteilt. Aber weder ein Densitometer noch ein geschulter Benutzer sind stets greifbar. Alternativ hierzu wird eine Vorlage mit genauen Standardmustern benötigt, um ein gewisses objektives Maß des idealen Tonspektrums zu liefern. Ein Standardmuster ist aber möglicherweise auch nicht verfügbar. In vielen Fällen ist es praktisch unmöglich, die Ausgabe einer Markierungsvorrichtung an das ideale Standardspektrum anzupassen.

Wenn die Herstellung durchgängiger oder konsistenter Ausgaben unter zwei oder mehr Markierungsvorrichtungen gewünscht wird, kann möglicherweise darauf verzichtet werden, den objektiven Idealstandard mit jeder der Vorrichtungen zu erzielen. Es würde beispielsweise häufig ausreichen, die Ausgabe eines ersten Druckers an die Ausgabe eines zweiten Druckers anzupassen, und zwar unabhängig davon, ob die beiden Ausgaben dem Idealstandard entsprechen. Der Erfindung liegt daher die Aufgabe zugrunde, verbesserte Verfahren und Vorrichtungen zum Anpassen der Ausgaben von zwei oder mehreren Markierungsvorrichtungen bereitzustellen, ohne sich auf einen objektiven Tonstufenstandard beziehen zu müssen. Der Erfindung liegt zudem die Aufgabe zugrunde, verbesserte Verfahren und Vorrichtungen zum Anpassen der Ausgaben von zwei oder mehreren Markierungsvorrichtungen bereitzustellen, ohne zusätzliche Geräte, Benutzer oder Standardmuster zu verwenden, die zur Erzielung eines objektiven Standardtonspektrums notwendig sind.

Gemäß der vorliegenden Erfindung werden ein Verfahren und eine Vorrichtung zur wesentlichen Anpassung der Ausgabe von einer Markierungsvorrichtung an die Ausgabe einer anderen Markierungsvorrichtung beschrieben.

Nach einem Aspekt der Erfindung wird ein Verfahren zur wesentlichen Anpassung einer ersten Ausgabe bereitgestellt, die von einer ersten Markierungsvorrichtung erzeugt wird, an eine zweite Ausgabe, die von einer zweiten Markierungsvorrichtung erzeugt wird. Das Verfahren umfasst das Erzeugen eines ersten Satzes von Rasterproben mit der ersten Markierungseinheit. Unter Verwendung der zweiten Markierungseinheit wird ein zweiter Satz von Rasterproben angefertigt. Der erste und der zweite Satz von Rasterproben wird miteinander verglichen, worauf ein oder mehrere Kalibriersollpunkte ermittelt werden. Eine Tonübertragungsfunktion wird dann auf die Kalibriersollpunkte eingestellt, um eine modifizierte Tonübertragungsfunktion zu erstellen. Abschließend wird die modifizierte Tonübertragungsfunktion benutzt, um eine erste Ausgabe von der ersten Markierungsvorrichtung zu erhalten, wobei eine eingebettete Tonübertragungsfunktion für ein Bild, das in einer Seitenbeischreibungssprache codiert ist außer Kraft gesetzt wird

Gegenüber dem Stand der Technik z.B. der WO 93/20648 wird mit diesem Verfahren keine wirkliche Kontrolle über die Mischfarben gewonnen, da hierfür eine komplizierte vierdimensionale Nachschlagetabelle erforderlich wäre, wie sie in der WO 93/20648 beschrieben. Anderersseits ist der Aufwand, diese einzelnen Tonübertragungsfunktionen für die jeweiligen Druckfarben, die der Druckvorrichtung zur Verfügung stehen (also Gelb, Magenta, Cyan und Schwarz und eventuell Akzentfarben) viel geringer ist, als der, eine komplizierte vierdimensionale Nachschlagetabelle zu erstellen und zu verwenden.

Soll Insbesondere keinen idealer Standard erzielt, sonderen lediglich die Ausgabe von wenigstens zwei Druckvorrichtungen untereinander angepasst werden, auch wenn diese dem Idealstandard nicht entsprechen, überwiegen die Vorteile des erfindungsgemäßen Verfahrens, einfach, schnell und billig zu sein gegenüber dem Nachteil die Schattierungen nicht ganz ideal zu drucken.

Nach einem weiteren Aspekt der Erfindung wird ein Markierungssystem bereitgestellt, das in der Lage ist, eine erste Ausgabe, die von einer ersten Markierungsvorrichtung erzeugt wird, an eine zweite Ausgabe, die von einer zweiten Markierungsvorrichtung erzeugt wird, weitgehend anzupassen. Das System umfasst einen optischen Sensor, ein Bildverarbeitungssubsystem und eine Markierungseinheit, die der ersten Markierungsvorrichtung zugeordnet ist. Der optische Sensor ist darauf ausgelegt, einen oder mehrere Kalibriersollpunkte zu ermitteln, indem er einen ersten Satz von Rasterproben, die von der ersten Markierungsvorrichtung erzeugt werden, mit einem zweiten Satz von Rasterproben vergleicht, die von der zweiten Markierungsvorrichtung erzeugt werden. Das Bildverarbeitungssubsystem ist darauf ausgelegt, ein Bild von einer Client-Anwendung zu empfangen, eine angepasste Tonübertragungsfunktion gemäß der Kalibriersollpunkte zu erstellen und das Bild mit Hilfe der modifizierten Tonübertragungsfunktion zu verarbeiten, um einen gerasterten Pixelstrom zu erzeugen.

Das Bildverarbeitungssystem ist darauf ausgelegt, einer eingebettete Tonübertragungsfunktion für ein Bild, das in einer Seitenbeschreibungssprache codiert ist außer Kraft zu setzen.

Die Markierungseinheit ist darauf ausgelegt, den gerasterten Pixelstrom zu empfangen und die erste Ausgabe zu erzeugen. Die Erfindung wird im folgenden anhand in der Zeichnung dargestellter Ausführungsbeispiele näher erläutert.

Es zeigen
- Fig. 1: ein Ablaufdiagramm zur Darstellung eines Verfahrens zum Anpassen der Ausgaben von zwei Markierungsvorrichtungen gemäß einem bevorzugten Ausführungsbeispiel der Erfindung,
- Fig. 2: eine Darstellung von zwei Sätzen von Tonstufenproben, erstellt von zwei Markierungsvorrichtungen gemäß dem in Fig. 1 gezeigten Verfahren,
- Fig. 3: eine Kurve einer angepassten Tonübertragungsfunktion gemäß einem bevorzugten Ausführungsbeispiel der Erfindung,
- Fig. 4: eine Kurve einer angepassten Tonübertragungsfunktion gemäß einem weiteren bevorzugten Ausführungsbeispiel der Erfindung,
- Fig. 5: ein Blockdiagramm zur Darstellung eines Markierungssystems gemäß einem weiteren bevorzugten Ausführungsbeispiel der Erfindung,
- Fig. 6: ein Blockdiagramm zur Darstellung einer Markierungsvorrichtung gemäß einem weiteren bevorzugten Ausführungsbeispiel der Erfindung,
- Fig. 7: ein Ablaufdiagramm zur Darstellung eines Prozesses zum Empfangen von Kalibriersollpunkten an einer Markierungsvorrichtung und zum Erstellen einer angepassten Tonübertragungsfunktion gemäß einem weiteren bevorzugten Ausführungsbeispiel der Erfindung, und
- Fig. 8: ein Ablaufdiagramm zur Darstellung eines Prozesses zum Empfangen von Kalibriersollpunkten von einem Scanner und zum Erstellen einer angepassten Tonübertragungsfunktion gemäß einem weiteren bevorzugten Ausführungsbeispiel der Erfindung.

Da elektrofotografische Markierungsvorrichtungen wie beispielsweise Drucker allgemein bekannt sind, bezieht sich die vorliegende Beschreibung insbesondere auf Elemente, die Teil der vorliegenden Erfindung sind oder direkt damit zusammenwirken. *Hier nicht gezeigte oder beschriebene Vorrichtungen sind aus den nach dem Stand der Technik bekannten wählbar.*

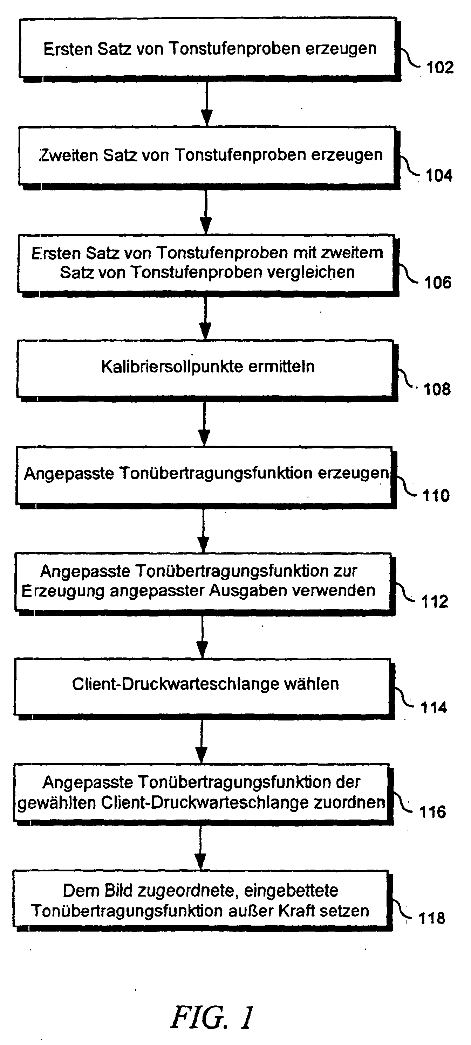

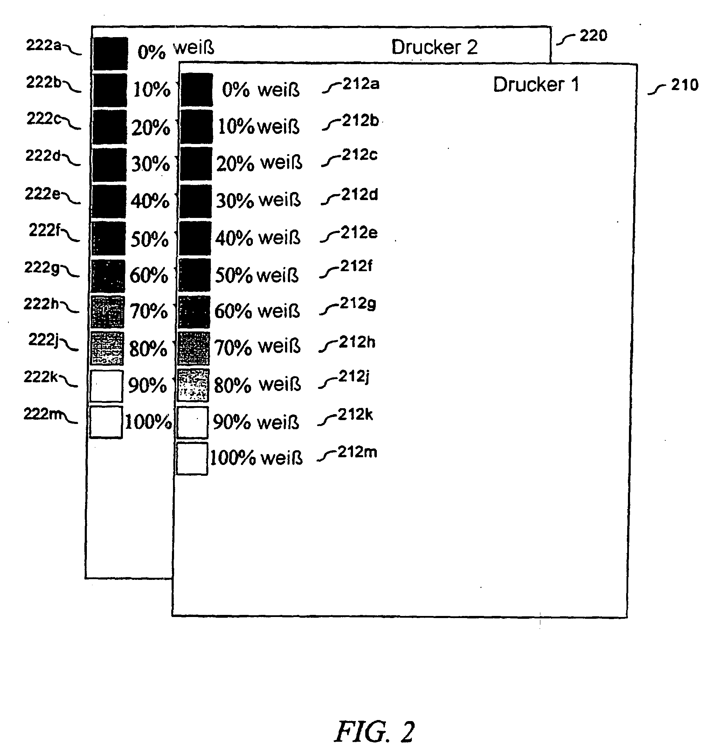

Fig. 1 und 2 stellen ein Verfahren zum Anpassen der Ausgabe einer ersten Markierungsvorrichtung an die Ausgabe einer zweiten Markierungsvorrichtung nach einem bevorzugten Ausführungsbeispiel der vorliegenden Erfindung dar. Im ersten Schritt 102 wird ein Satz von Tonstufenproben aus einer ersten Markierungsvorrichtung erzeugt. Fig. 2 zeigt beispielsweise eine erste Ausgabeprobenseite 210 aus einem ersten Drucker. Die erste Ausgabeprobenseite 210 umfasst einen ersten Satz von Tonstufenproben 212a-m. Bei diesen Tonstufenproben 212a-m kann es sich beispielsweise um Rastertöne handeln. In Schritt 104 wird dann von der zweiten Markierungsvorrichtung ein zweiter Satz von Tonstufenproben 222a-m erstellt. Bei diesen Tonstufenproben 222a-m kann es sich ebenfalls um Rastertöne handeln. Zur besseren Übersicht wird der erste und zweite Satz von Tonstufenproben 212a-m, 222a-m in Fig. 2 in Schritten zu 10% weiß dargestellt. Die Tonstufenproben würden vorzugsweise eine feinere Auflösung haben. Beispielsweise wären Abstufungen von 2,5% weiß verwendbar.

In Schritt 106 wird der erste Satz von Tonstufenproben 212a-m mit dem zweiten Satz von Tonstufenproben 222a-m verglichen. Der Benutzer der Markierungsvorrichtung kann die Tonstufenproben 212a-m, 222a-m entweder per Sichtprüfung oder durch Messung vergleichen, oder der Vergleich ist automatisch durchführbar, beispielsweise mit einem Scanner. In Schritt 108 wird ein Kalibriersollpunkt oder werden mehrere Kalibriersollpunkte bestimmt. Die Kalibriersollpunkte werden bestimmt, indem eine Tonstufe 212 aus dem ersten Satz ermittelt wird, die am besten mit einer Tonstufe 222 aus dem zweiten Satz übereinstimmt. Beispielsweise könnte die Tonstufe 212c von 20% weiß der ersten Ausgabeprobenseite 210 mit der Tonstufe 222d von 30% weiß der zweiten Ausgabeprobenseite 220 übereinstimmen. In diesem Fall entspricht die Dichte der Tonstufe 212c von 20% weiß der ersten Ausgabeprobenseite 210 näherungsweise am engsten der Dichte der Tonstufe 222d von 30% weiß der zweiten Ausgabeprobenseite 220. Die Beziehung zwischen diesen beiden Tonstufenproben 212c, 222d definiert einen Kalibriersollpunkt zwischen dem ersten Drucker und dem zweiten Drucker. Der Vergleichsvorgang lässt sich für mehrere der Tonstufenproben in Fig. 2 wiederholen, um mehr Kalibriersollpunkte zu erzeugen. Vorzugsweise sollten zwischen zehn und zwanzig Kalibriersollpunkte in Schritt 108 bestimmt werden. Abhängig von den vorliegenden Bedingungen sind jedoch mehr oder weniger Kalibriersollpunkte verwendbar.

Sobald die Kalibriersollpunkte bestimmt worden sind, wird in Schritt 110 eine angepasste Tonübertragungsfunktion erzeugt. Die angepasste Tonübertragungsfunktion stellt die Beziehung zwischen den ersten und zweiten Sätzen von Tonstufenproben 212a-m bzw. 222a-m dar. Weil die ersten und zweiten Sätze von Tonstufenproben 212a-m, 222a-m typische Ausgaben des ersten bzw. zweiten Druckers darstellen, definiert die angepasste Tonübertragungsfunktion in einem allgemeineren Sinne auch eine Beziehung zwischen zwei typischen Ausgaben. Diese Beziehung ist verwendbar, um die Ausgabe eines Druckers an die eines anderen Druckers anzupassen, wodurch durchgängige Ausgabetonstufen von beiden Druckern gewährleistet sind. Schritt 110 zur Erstellung einer angepassten Tonübertragungsfunktion kann das Modifizieren einer vorhandenen Tonübertragungsfunktion gemäß der Kalibriersollpunkte beinhalten.

Um die Ausgabe des ersten Druckers an die Ausgabe des zweiten Druckers anzupassen, wird in Schritt 112 die angepasste Tonübertragungsfunktion zur Steuerung der Ausgabe des ersten Druckers verwendet. Beispielsweise zeigt der zuvor beschriebene Kalibriersollpunkt an, dass eine Tonstufe von 30% weiß aus dem zweiten Drucker dieselbe Ausgabetondichte wie eine Tonstufe von 20% weiß aus dem ersten Drucker erzeugt. Das Ergebnis ist, dass der erste Drucker in Ansprechen auf dieselbe Client-Anforderung nach einer Tonstufe von 30% weiß eine Tondichte erzeugt, die heller ist als die von dem zweiten Drucker erzeugte. Die Steuerung des ersten Druckers derart, dass er eine dunklere Tondichte in Ansprechen auf diese Anforderung erzeugt, liefert daher durchgängige Ausgabetonwerte zwischen den beiden Druckern. Im konkreten Fall könnte der erste Drucker eine Tonstufe von 20% weiß in Ansprechen auf eine Client-Anforderung nach einer Tonstufe von 30% weiß erzeugen. Auf diese Weise erzeugen der erste und zweite Drucker beide dieselbe Ausgabetondichte in Ansprechen auf eine Client-Anforderung nach einer Tonstufe von 30% weiß. Es kann sein, dass keiner der beiden Drucker eine perfekte Tonstufe von 30% weiß gemäß dem objektiven Idealstandard erzeugt, aber die Ausgaben der beiden Drucker sind zumindest für diese Tonstufe an einander angepasst. Durch Anwendung dieses Verfahrens auf eine Vielzahl unterschiedlicher Tonstufen 212a-m, 222a-m lässt sich eine durchgängige Ausgabe über das gesamte Spektrum verfügbarer Ausgaben von Markierungsvorrichtungen sicherstellen.

Falls erforderlich, lässt sich eine umgekehrte Rasterung durchführen, um eine Tonstufenmanipulation von Bildern zu ermöglichen, die auf Anwendungsebene gerastert sind. In diesem Fall umfasst das Bild keine inhärenten und getrennten Raster- oder Tonstufen. Die umgekehrte Rasterung setzt das Rasterbild in eine Sammlung von Rasterzellen um, von denen jede aus einer Anzahl von Pixeln aus dem Rasterbild besteht. Diese Tonstufe für jede Rasterzelle lässt sich dann entsprechend der angepassten Tonübertragungsfunktion einstellen. Dieser Prozess würde Bestandteil von Schritt 112 sein, in dem die angepasste Tonübertragungsfunktion verwendet wird, um eine angepasste Ausgabe zu erstellen.

Wahlweise kann die angepasste Tonübertragungsfunktion allen Druckaufträgen zugeordnet werden, die mit einer bestimmten Druckwarteschlange oder mit einem virtuellen Drucker verbunden sind, indem man die jeweilige Druckwarteschlange wählt (Schritt 114) und die angepasste Tonübertragungsfunktion der gewählten Druckwarteschlange zuordnet (Schritt 116). Ebenfalls wahlweise lassen sich gegebenenfalls vorgegebene Tonübertragungsfunktionen außer Kraft setzen, die in einem PDL-codierten Bild hinterlegt sind (Schritt 118).

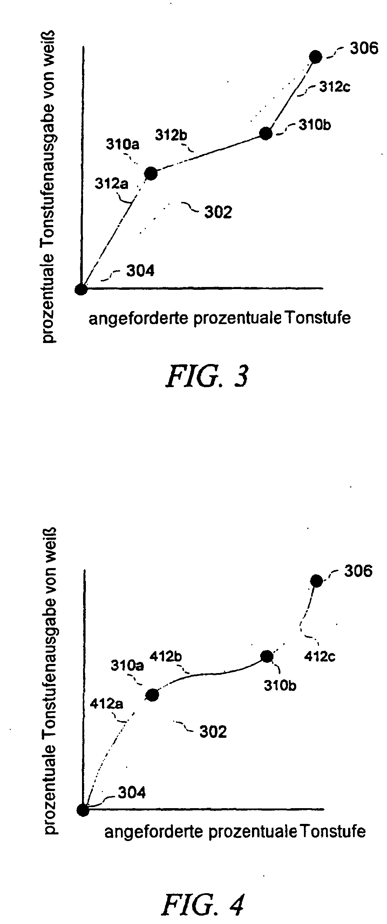

Die Erstellung einer angepassten Tonübertragungsfunktion (Schritt 110) ist nach einer Reihe verschiedener statistischer Verfahren durchführbar. Unter Bezug auf einen oder mehrere Kalibriersollpunkte sollte eine Funktion definiert werden, die jeden der Sollpunkte einbezieht. Fig. 3 zeigt eine Kurve 300 der prozentualen Tonstufenausgabe von weiß abgetragen zur angeforderten prozentualen Tonstufe. Markierungsvorrichtungen verwenden üblicherweise eine 1: 1-Tonübertragungsfunktion 302, um Eingabe und Ausgabe aneinander anzupassen. An einem Ende 304 der 1:1-Tonübertragungsfunktion 302 entspricht eine Tonstufeneingabe von 0% weiß einer Tonstufenausgabe von 0% weiß. An dem anderen Ende 306 entspricht eine Tonstufenanforderung von 100% weiß einer Tonstufenausgabe von 100% weiß. Zwischen diesen beiden Endpunkten 304, 306 erzeugt die 1:1-Tonübertragungsfunktion für sämtliche Eingabewerte eine ähnliche 1:1-Entsprechung. Eine angepasste Tonübertragungsfunktion unterscheidet sich davon insofern, als dass sie einen oder mehrere Kalibriersollpunkte einbezieht, etwa die Sollpunkte 310a,b. Beispielsweise sind die Kalibriersollpunkte 310a,b aus Fig. 3 anhand von Liniensegmenten 312a-c miteinander verknüpft. Alternativ hierzu werden in Fig. 4 glatte Kurvensegmente 412a-c verwendet, um die Kalibriersollpunkte 310a,b miteinander zu verknüpfen. In jedem Fall bleiben die Endpunkte 304, 306 vorzugsweise gleich, d.h. sie stellen eine prozentuale Entsprechung von 0% weiß zu 0% weiß sowie von 100% weiß zu 100% weiß dar. Dies ist im Allgemeinen auch dann vorzuziehen, wenn die tatsächliche Ausgaben von 0% weiß (d.h. 100% schwarz) der beiden Drucker nicht genau übereinstimmen. Allerdings lassen sich die Endpunkte einer angepassten Tonübertragungsfunktion bei Bedarf einstellen.

Das zuvor beschriebene Verfahren ist allgemein mit Bezug auf die von einem Schwarzweißdrucker erzeugten Grautonstufen beschrieben worden. Das Verfahren ist gleichermaßen auf Systeme anwendbar, die eine Farbausgabe erzeugen. Für den Fall, dass ein Farbdrucker rot, grün und blau (RGB) als Grundfarben verwendet, sollte für jede der drei Grundfarben eine separate, angepasste Tonübertragungsfunktion erzeugt werden. Für den Fall, dass ein Farbdrucker Zyan, Gelb, Magenta und Schwarz als Grundfarben verwendet, sollte für jede der vier Grundfarben eine separate, angepasste Tonübertragungsfunktion erzeugt werden. In jedem dieser Fälle werden erste und zweite Sätze von Tonstufenproben 212, 222 für den Vergleich verschiedener Nuancen jeder Komponentenfarbe erzeugt. Das Verfahren ist zudem auf Drucker anwendbar, die Schmuckfarben erzeugen, sowie auf Drucker mit einer beliebigen Zahl spezieller Zusatzfarbsysteme. Auch hier würden erste und zweite Sätze von Tonstufenproben für jede der Schmuck- oder Zusatzfarben erzeugt werden.

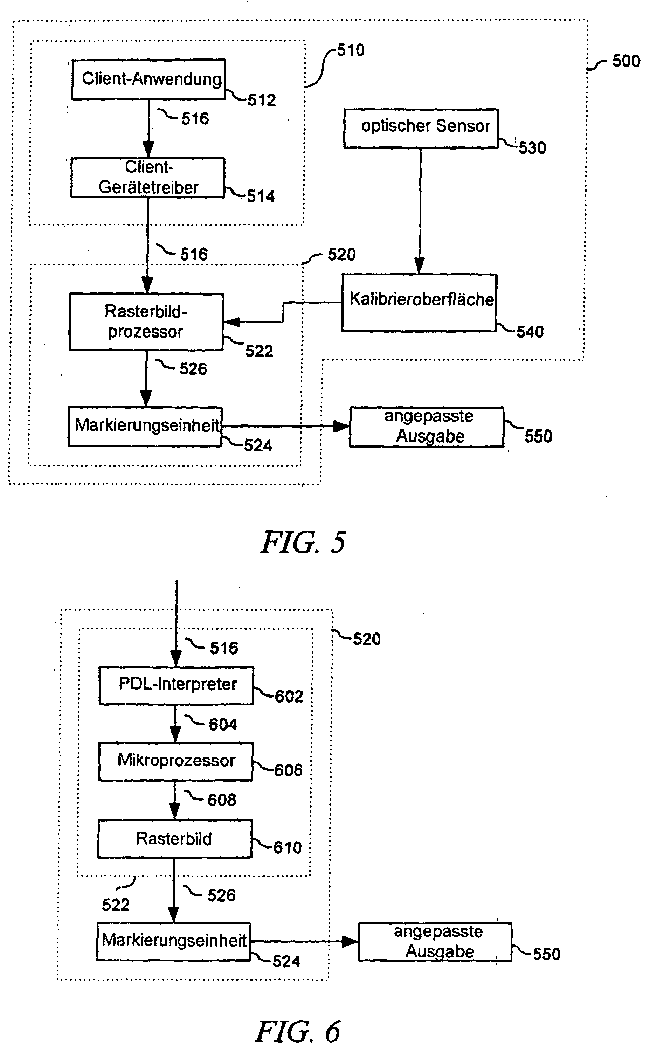

Mit Bezug auf Fig. 5 wird nachfolgend ein Markierungssystem 500 nach einem weiteren bevorzugten Ausführungsbeispiel der Erfindung besprochen. Das Markierungssystem 500 umfasst einen Computerarbeitsplatz oder einen Client 510 und eine Markierungsvorrichtung 520. Der Client 510 umfasst eine Client-Anwendung 512, die zur Erstellung oder zum Auffinden eines durch die Markierungsvorrichtung 520 zu erzeugenden Bildes verwendbar ist. Es sind zahlreiche Client-Anwendungen 512 verfügbar, wie beispielsweise Photoshop® von Adobe Systems Inc. aus Mountain View, Kalifornien, USA. Üblicherweise beginnt der Herstellungsprozess eines Bildes mit der Wahl einer "Druckoption" in der Client-Anwendung 512. Die Client-Anwendung 512 sendet das codierte Bild 516 an einen Client-Gerätetreiber 514. Der Client-Gerätetreiber 514 codiert das Bild in Form einer Seitenbeschreibungssprache (Page Description Language / PDL). Zu den verfügbaren Seitenbeschreibungssprachen zählen u.a. die PostScript® Sprache, das austauschbare Dokumentformat (Portable Document Format / PDF) sowie die Printer Control Language ("PCL"). Der Client-Gerätetreiber 514 kann selbst ein allgemeiner PostScript-Seitenbeschreibungstreiber (Page Description Driver / PPD) sein, oder er kann ein speziell auf die Client-Anwendung 512 oder auf das Betriebssystem des Client 510 abgestimmter Treiber sein. Der Client-Gerätetreiber 514 steht in Kommunikation mit der Markierungsvorrichtung 520. Nach Codieren des Bildes in einer Seitenbeschreibungssprache sendet der Client-Gerätetreiber 514 das codierte Bild 516 an die Markierungsvorrichtung 520.

Die Markierungsvorrichtung 520 umfasst einen Rasterbildprozessor 522 sowie eine Markierungseinheit 524. Der Rasterbildprozessor 522 empfängt das PDL-codierte Bild 516 von dem Client-Gerätetreiber 514. Der Rasterbildprozessor interpretiert das PDL-codierte Bild 516 und setzt das codierte Bild 516 in einen gerasterten Pixelstrom 526 um. Der gerasterte Pixelstrom 526 wird dann der Markierungseinheit 524 zur Erstellung auf einem Empfangselement übergeben.

Fig. 6 zeigt einen Rasterbildprozessor 522 in detaillierterer Darstellung gemäß einem weiteren bevorzugten Ausführungsbeispiel der Erfindung. Ein PDL-Interpreter 602 empfängt und interpretiert das PDL-codierte Bild 516. Der PDL-Interpreter kann beispielsweise ein PostScript-Interpreter sein, wie er von Adobe Systems, Inc. angeboten wird. Der PDL-Interpreter 602 setzt das PDL-codierte Bild 516 in ein Zwischenbild um und übergibt das interpretierte Zwischenbild 604 an einen Mikroprozessor 606. Der Mikroprozessor 606 wendet eine Tonübertragungsfunktion auf das Zwischenbild 604 an. Wie nachfolgend beschrieben, ist es diese Tonübertragungsfunktion, die zur Anpassung der Ausgabe der Markierungsvorrichtung 520 an die Ausgabe einer anderen Markierungsvorrichtung einstellbar ist. Das Rasterbild 608 wird dann in einem Rasterspeicher 610 abgelegt und der Markierungseinheit 524 in Form eines gerasterten Pixelstroms 526 übergeben.

In Fig. 5 und 6 ist der Rasterbildprozessor 522 als eine Komponente der Markierungsvorrichtung dargestellt. Alternativ hierzu kann der Rasterbildprozessor 522 auch am Client 510 angeordnet sein, oder es kann sich dabei um eine eigenständige Einheit handeln, die separat und abgesetzt zur Markierungsvorrichtung 520 angeordnet ist.

Zudem zeigt Fig. 5 einen optischen Sensor 530 und eine Kalibrieroberfläche 540. Gemäß dem zuvor beschriebenen Verfahren vergleicht der optische Sensor 530 die ersten und zweiten Sätze 212, 222 der Tonstufenproben miteinander, um einen oder mehrere Kalibriersollpunkte 310 zu bestimmen. Der optische Sensor 530 kann ein menschlicher Benutzer sein, der die ersten und zweiten Sätze 212, 222 der Tonstufen miteinander vergleicht, um einzelne passende Tonstufen 212a-m, 222a-m zu ermitteln. Wie zuvor beschrieben, werden diese passenden Tonstufen 212a-m, 222a-m dann verwendet, um Kalibriersollpunkte 310 zu bestimmen. Soweit verfügbar, ist als optischer Sensor 530 auch ein Densitometer verwendbar, um passende Tonstufenpaare 212a-m, 222a-m zu ermitteln. Alternativ hierzu ist als optischer Sensor 530 ein Scanner verwendbar. Bei dem Scanner kann es sich um einen Flachbett-Desktopscanner handeln, der darauf ausgelegt ist, die ersten und zweiten Ausgabeprobenseiten 210, 222 abzutasten, um Kalibriersollpunkte 310 zu bestimmen. Hier kann der Scanner einzelne Tonstufenproben 212a-m, 222a-m bestimmen und miteinander vergleichen, die beispielsweise an vorbestimmten Stellen der Ausgabeprobenseiten 210, 220 angeordnet sind.

Nach ihrer Bestimmung werden die Kalibriersollpunkte 310 von der Kalibrieroberfläche 540 übernommen. Die Kalibrieroberfläche 540 kann eine Benutzeroberfläche umfassen, die die Kalibriersollpunkte 310 entgegennimmt, die durch Sichtprüfung eines Benutzers oder durch Verwendung eines Densitometers bestimmt worden sind. In diesem Fall gibt der Benutzer zueinander passende Tonstufenprozentsätze in Reaktion auf die Abfragen der Benutzeroberfläche ein. Alternativ hierzu kann die Kalibrieroberfläche 540 eine elektronische Verbindung mit dem Scanner umfassen, um automatisch von dem Scanner bestimmte Kalibriersollpunkte 310 zu empfangen oder entgegen zu nehmen. Wenn ein Scanner als optischer Sensor verwendet wird, kann der Benutzer die Ausgabeprobenseiten 210, 220 in einer vorbestimmten Beziehung auf den Scanner legen, bevor der automatische Vergleichsvorgang beginnt. In jedem Fall kann sich die Kalibrieroberfläche 540 auf dem Client 510 oder der Markierungsvorrichtung 520 befinden, oder sie kann eine separate Komponente darstellen.

Gemeinsam können die Kalibrieroberfläche 540, der Client-Gerätetreiber 514 und der Rasterbildprozessor 522 ein Bildverarbeitungssubsystem bilden. Als Ganzes nimmt das Bildverarbeitungssubsystem ein Bild von der Client-Anwendung 512 entgegen, stellt die Tonübertragungsfunktion gemäß der Kalibriersollpunkte 310 ein, um eine angepasste Tonübertragungsfunktion zu erzeugen, und verarbeitet das Bild mithilfe der angepassten Tonübertragungsfunktion, um einen gerasterten Pixelstrom 526 zu erzeugen. Der gerasterte Pixelstrom 526 wird dann von der Markierungsvorrichtung verwendet, um eine Ausgabe zu erzeugen, die nach dem zuvor beschriebenen Verfahren an die Ausgabe der zweiten Markierungsvorrichtung angepasst ist.

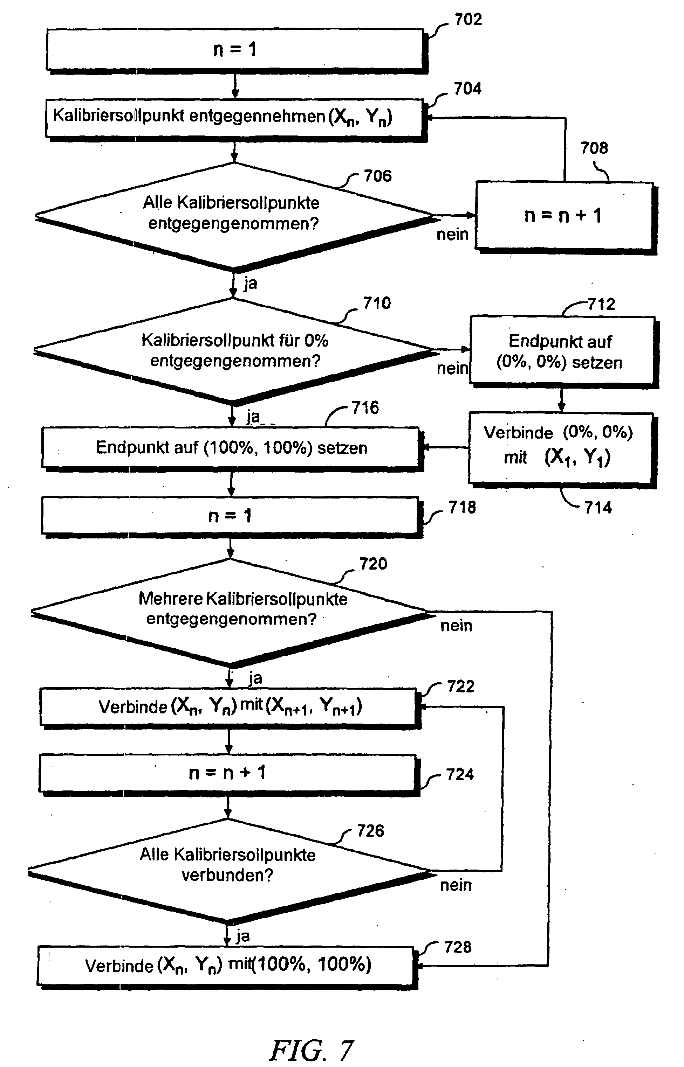

In dem bevorzugten Ausführungsbeispiel aus Fig. 5 werden die Kalibriersollpunkte 310 von der Kalibrieroberfläche 540 an den Rasterbildprozessor übergeben, der nach dem zuvor beschriebenen Verfahren eine angepasste Tonübertragungsfunktion erzeugt. Alternativ hierzu und nach einem anderen bevorzugten Ausführungsbeispiel können die Kalibriersollpunkte 310 an den Client 510 übergeben werden, und die angepasste Tonübertragungsfunktion kann statt auf der Ebene der Markierungsvorrichtung auf Client-Ebene erzeugt und angewandt werden. In jedem dieser Fälle kann die angepasste Tonübertragungsfunktion als Transformationstabelle ausgebildet sein, die eine gegebene Ausgabetonstufe 222a-m des zweiten Druckers auf eine passende Ausgabetonstufe 212a-m des ersten Druckers abbildet. Ein Programm für eine Benutzeroberfläche, die als Teil der Markierungsvorrichtung 520 arbeitet und die Funktion der Kalibrieroberfläche 540 wahrnimmt, fragt den Benutzer nach Angaben zum Kalibriersollpunkt, erzeugt anhand dieser Angaben eine angepasste Tonübertragungsfunktion und stellt die angepasste Tonübertragungsfunktion dem Rasterbildprozessor 522 zur Verfügung. Mit Bezug auf Fig. 7 wird nachfolgend die logische Operation eines Prozesses besprochen.

Fig. 7 stellt ein Ablaufdiagramm der Logik dar. Der Prozess beginnt mit der Initialisierung einer Zählervariablen "n", die in Schritt 702 auf eins gesetzt wird. Das Programm nimmt dann in Schritt 704 einen Kalibriersollpunkt entgegen. Der Kalibriersollpunkt wird in Form eines passenden Prozentsatzes entgegengenommen. Der passende Prozentsatz gibt einen Übereinstimmungspunkt zwischen einer Tonstufenprobe von der ersten Ausgabeprobe und einer Tonstufenprobe von der zweiten Ausgabeprobe wieder. Diese Information kann in Form eines kartesischen Koordinatensatzes (Xₙ, Yₙ) vorliegen, wobei Xₙ den prozentualen Weißwert der ersten passenden Tonstufenprobe darstellt, während Yₙ den prozentualen Weißwert der zweiten passenden Tonstufenprobe darstellt.

Der Kalibriersollpunkt wird von einem Benutzer der Markierungsvorrichtung mithilfe einer Benutzeroberfläche übergeben. In diesem Fall dient die Benutzeroberfläche als die in Fig. 5 gezeigte Kalibrieroberfläche 540. In Schritt 706 ermittelt das Programm, ob alle Kalibriersollpunkte entgegengenommen worden sind. Dies lässt sich durch eine Anweisung seitens des Benutzers der Markierungsvorrichtung implementieren, die besagt, dass alle Sollpunkte eingegeben worden sind. Wenn noch nicht alle Sollpunkte eingegeben worden sind, wird in Schritt 708 der Zähler inkrementiert, worauf in Schritt 704 ein weiterer Kalibriersollpunkt entgegengenommen wird. Es werden vorzugsweise mehrere Kalibriersollpunkte in aufsteigender Reihenfolge ihrer prozentualen Weißwerte entgegengenommen. Wenn alle Kalibriersollpunkte entgegengenommen worden sind, fährt das Programm mit Schritt 710 fort, wo der Prozess zur Erstellung einer gemäß den Kalibriersollpunkten angepassten Tonübertragungsfunktion beginnt.

In Schritt 710 ermittelt das Programm, ob ein Kalibriersollpunkt eingegangen ist, der 0% weiß entspricht. Wenn das so ist, fährt das Programm mit Schritt 716 fort. Falls kein Kalibriersollpunkt eingegangen ist, der 0% weiß entspricht, fährt das Programm mit Schritt 712 fort, in dem ein Endpunkt der angepassten Tonübertragungsfunktion auf den Punkt (0%, 0%) gesetzt wird, was einer vollständig schwarzen Tonstufe entspricht. Dieser Endpunkt (0%, 0%) wird dann in Schritt 714 mit dem ersten Kalibriersollpunkt (X1, Y1) verbunden. In Schritt 716 wird der andere Endpunkt der angepassten Tonübertragungsfunktion auf den Punkt (100%, 100%) gesetzt, was einer vollständig weißen Tonstufe entspricht. In Schritt 718 wird die Zählervariable wieder auf eins gesetzt. In Schritt 720 ermittelt das Programm, ob mehrere Kalibriersollpunkte entgegengenommen worden sind. Falls das nicht so ist, fährt das Programm mit dem nachfolgend beschriebenen Schritt 728 fort. Wenn in Schritt 720 festgestellt wird, dass mehrere Kalibriersollpunkte entgegengenommen worden sind, fährt das Programm mit Schritt 722 fort, in dem der erste Sollpunkt (Xₙ, Yₙ) mit dem zweiten Sollpunkt (Xₙ₊₁, Yₙ₊₁) verbunden wird. Die Zählervariable n wird dann in Schritt 724 inkrementiert. Als nächstes ermittelt das Programm in Schritt 726, ob alle Kalibriersollpunkte verbunden worden sind. Falls das so ist, fährt das Programm mit Schritt 728 fort, in dem der letzte verbundene Kalibriersollpunkt (Xₙ, Yₙ) mit dem Endpunkt (100%, 100%) verbunden wird, um die angepasste Tonübertragungsfunktion abzuschließen. Wenn das Programm in Schritt 726 ermittelt, dass nicht alle Kalibriersollpunkte verbunden worden sind, kehrt das Programm nach Schritt 722 zurück und verbindet den zweiten Sollpunkt (Xₙ, Yₙ) mit dem dritten Sollpunkt (Xₙ₊₁, Yₙ₊₁). Diese Schleife setzt sich so lange fort, bis das Programm in Schritt 726 ermittelt hat, dass alle Kalibriersollpunkte verbunden worden sind. Es sei darauf hingewiesen, dass, wenn die Kalibriersollpunkte in den Schritten 704 bis 708 nicht in aufsteigender Reihenfolge der prozentualen Weißwerte entgegengenommen worden sind, die Kalibriersollpunkte zunächst in dieser Reihenfolge sortiert werden sollten, bevor sie in den Schritten 710 bis 728 verbunden werden.

Wie mit Bezug auf Fig. 3 und Fig. 4 beschrieben, gibt es eine Reihe unterschiedlicher statistischer Techniken zum Verbinden der Kalibriersollpunkte untereinander. Jede dieser Techniken ist in Verbindung mit dem in Fig. 7 dargestellten Prozess zur Erzielung der gewünschten Ergebnisse verwendbar.

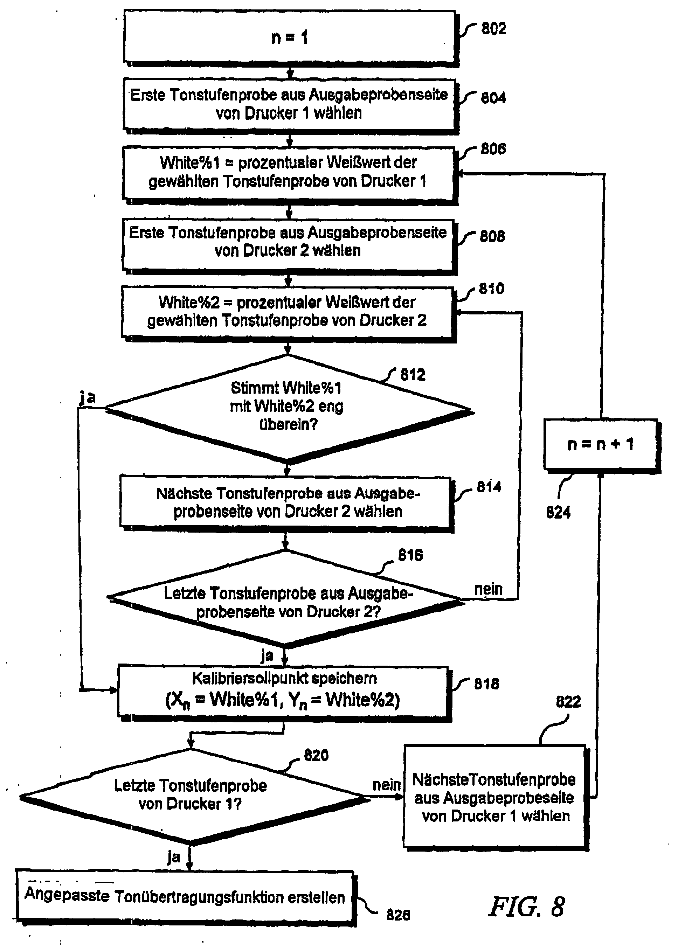

Eine ähnliche Kalibrieroberfläche ist verwendbar, um Kalibriersollpunkte von einem an den Client angeschlossenen Scanner entgegenzunehmen und eine angepasste Tonübertragungsfunktion auf der Basis der entgegengenommenen Kalibriersollpunkte zu erstellen. Ein geeignetes Kalibrieroberflächenprogramm wird in dem Ablaufdiagramm aus Fig. 8 und mit Bezug auf Fig. 2 veranschaulicht. Als erstes wird in Schritt 802 eine Zählervariable "n" initialisiert und auf eins gesetzt. Dann wird in Schritt 804 eine Tonstufenprobe 212a aus der ersten Ausgabeprobenseite 210 gewählt. Der Scanner kann die Tonstufenprobe 212a beispielsweise anhand ihrer Lage an einer vorbestimmten Position auf der ersten Ausgabeprobenseite 210 bestimmen und auswählen. Eine Variable mit der Bezeichnung White%1 wird dann in Schritt 806 auf den prozentualen Weißwert der gewählten Tonstufenprobe 212a gesetzt. Als nächstes wird in Schritt 808 eine Tonstufenprobe 222a aus der zweiten Ausgabeprobenseite gewählt. Eine Variable mit der Bezeichnung White%2 wird dann in Schritt 810 auf den prozentualen Weißwert der gewählten Tonstufenprobe 222a gesetzt. In Schritt 812 ermittelt das Programm, ob White%1 eine enge Übereinstimmung mit White%2 aufweist oder möglicherweise gleich ist. Wenn eine Übereinstimmung besteht, fährt das Programm mit dem nachfolgend beschriebenen Schritt 818 fort. Wenn keine Übereinstimmung besteht, fährt das Programm mit Schritt 814 fort, in dem die nächste Tonstufenprobe 222b aus der zweiten Ausgabeprobenseite 220 gewählt wird. Das Programm ermittelt dann, ob die gewählte Tonstufenprobe 222b die letzte der zweiten Ausgabeprobenseite 220 ist. Wenn das so ist, fährt das Programm mit Schritt 818 fort. Wenn das nicht so ist, kehrt das Programm nach Schritt 810 und 812 zurück, um zu ermitteln, ob diese neu gewählte Tonstufenprobe 222b aus der zweiten Ausgabeprobenseite 220 mit der gewählten Tonstufenprobe 212a aus der ersten Ausgabeprobenseite 210 übereinstimmt.

In Schritt 818 speichert das Programm einen Kalibriersollpunkt für die Werte (Xₙ = White%1, Yₙ = White%2). Dies geschieht, sobald in Schritt 812 eine Übereinstimmung ermittelt wird, oder wenn die letzte Tonstufenprobe 222m aus der zweiten Ausgabeprobenseite 220 mit einer gegebenen Tonstufenprobe 212a aus der ersten Ausgabeprobenseite 210 verglichen worden ist. Sobald in Schritt 818 ein Kalibriersollpunkt gespeichert worden ist, ermittelt das Programm, ob die gewählte Tonstufenprobe 212a die letzte Tonstufenprobe aus der ersten Ausgabeprobenseite 210 ist. Wenn das so ist, fährt das Programm mit Schritt 826 fort. Wenn das nicht so ist, fährt das Programm mit Schritt 822 fort, um in Schritt 820 die nächste Tonstufenprobe 212b aus der ersten Ausgabeprobenseite 210 zu wählen. In Schritt 824 wird der Zähler "n" dann inkrementiert, und das Programm kehrt zu Schritt 806 zurück, um den Vorgang zur Bestimmung eines Kalibriersollpunktes für die neu gewählte Tonstufenprobe 212b zu beginnen. In Schritt 826, der dann ausgeführt wird, sobald alle Kalibriersollpunkt gespeichert worden sind, erzeugt das Programm gemäß den gespeicherten Kalibriersollpunkten eine angepasste Tonübertragungsfunktion. Dies kann nach den zuvor erläuterten Verfahren erfolgen.

### Bezugszeichen

- 210: erste Ausgabeprobenseite
- 220: zweite Ausgabeprobenseite
- 212a-m: erster Satz von Tonstufenproben
- 222a-m: zweiter Satz von Tonstufenproben
- 212: Tonstufe aus dem ersten Satz
- 222: Tonstufe aus dem zweiten Satz
- 300: Kurve der prozentualen Tonstufenausgabe
- 302: 1: 1-Tonübertragungsfunktion
- 304: Ende der 1:1-Tonübertragungsfunktion
- 306: anderes Ende der 1:1-Tonübertragungsfunktion
- 310a,b: Kalibriersollpunkt
- 312a, b, c: Liniensegment
- 412a, b, c: Kurvensegment
- 500: Markierungssystem
- 510: Client
- 512: Client-Anwendung
- 514: Client-Gerätetreiber
- 516: PDL-codiertes Bild
- 520: Markierungsvorrichtung
- 522: Rasterbildprozessor
- 524: Markierungseinheit
- 526: gerasterter Pixelstrom
- 530: optischer Sensor
- 540: Kalibrieroberfläche
- 550: angepasste Ausgabe
- 602: PDL-Interpreter
- 604: Zwischenbild
- 606: Mikroprozessor
- 608: Rasterbild
- 610: Rasterspeicher

## Patentansprüche

1. Verfahren zum weitgehenden Anpassen einer ersten von einer ersten Markierungsvorrichtung (520) erzeugten Ausgabe an eine zweite von einer zweiten Markierungsvorrichtung (520) erzeugten Ausgabe, wobei das Verfahren folgende Schritte umfasst:
Erzeugen eines ersten Satzes einer oder mehrerer Tonstufenproben (212) mit der ersten Markierungsvorrichtung (520);
Erzeugen eines zweiten Satzes einer oder mehrerer Tonstufenproben (222) mit der zweiten Markierungsvorrichtung (520);
Vergleichen des ersten Satzes von Tonstufenproben (212) mit dem zweiten Satz von Tonstufenproben (222);
Ermitteln eines oder mehrerer Kalibriersollpunkte (310);
Erstellen einer gemäß der Kalibriersollpunkte (310) angepassten Tonübertragungsfunktion, die der ersten Markierungsvorrichtung (520) zugeordnet ist;
außer Kraft Setzen einer eingebetteten Tonübertragungsfunktion, die einem in einer Seitenbeschreibungssprache codierten Bild (516) zugeordnet ist, das von der ersten Markierungsvorrichtung (520) zu erzeugen ist.
Verwenden der angepassten Tonübertragungsfunktion, um eine erste Ausgabe (210) von der ersten Markierungsvorrichtung (520) zu erhalten.

2. Verfahren nach Anspruch 1,
**dadurch gekennzeichnet,**
**dass** die Markierungsvorrichtung (520) eine Druckvorrichtung ist.

3. Verfahren nach einem der Ansprüche 1 bis 2,
**dadurch gekennzeichnet,**
**dass** der erste Satz von Tonstufenproben (212) ein oder mehrere Rastertöne umfasst.

4. Verfahren nach einem der Ansprüche 1 bis 3,
**dadurch gekennzeichnet,**
**dass** der Schritt des Vergleichens das Vergleichen des ersten Satzes von Tonstufenproben (212) mit dem zweiten Satz von Tonstufenproben (222) mittels Sichtprüfung und/oder mit einem Densitometer und/oder mit einem Scanner umfasst.

5. Verfahren nach einem der Ansprüche 1 bis 4,
**dadurch gekennzeichnet,**
**dass** der Schritt des Ermittelns der Kalibriersollpunkte (310) das Ermitteln zwischen 10 und 20 Sollpunkten umfasst.

6. Verfahren nach einem der Ansprüche 1 bis 5,
**dadurch gekennzeichnet,**
**dass** der Schritt des Erzeugens der angepassten Tonübertragungsfunktion in Verbindung mit einem Rasterbildprozessor (522) erfolgt.

7. Verfahren nach einem der Ansprüche 1 bis 6,
**dadurch gekennzeichnet,**
**dass** der Schritt des Erzeugens der angepassten Tonübertragungsfunktion in Verbindung mit einem Client-Gerätetreiber (514) erfolgt.

8. Verfahren nach einem der Ansprüche 1 bis 7,
**dadurch gekennzeichnet,**
**dass** das Erzeugen der angepassten Tonübertragungsfunktion das Modifizieren einer vorhandenen Tonübertragungsfunktion umfasst.

9. Verfahren nach einem der Ansprüche 1 bis 8,
**dadurch gekennzeichnet,**
**dass** das Erzeugen der angepassten Tonübertragungsfunktion das Verknüpfen der Kalibriersollpunkte (310) mit einem oder mehreren Liniensegmenten (312) umfasst.

10. Verfahren nach einem der Ansprüche 1 bis 9,
**dadurch gekennzeichnet,**
**dass** das Erzeugen der angepassten Tonübertragungsfunktion das Verknüpfen der Kalibriersollpunkte (310) zur Ausbildung eines glatten Kurvensegments (412) umfasst.

11. Verfahren nach einem der Ansprüche 1 bis 10,
**dadurch gekennzeichnet,**
**dass** das Verwenden der angepassten Tonübertragungsfunktion zur Erstellung der ersten Ausgabeprobe (210) von der Markierungsvorrichtung (520) zudem folgende Schritte umfasst:
das umgekehrte Rastern eines Rasterbildes zur Unterteilung des Rasterbildes in Rasterzellen; und
das Verwenden der angepassten Tonübertragungsfunktion zur Abstimmung einer oder mehrerer den Rasterzellen zugeordneter Rasterstufen.

12. Verfahren nach einem der Ansprüche 1 bis 11,
**dadurch gekennzeichnet,**
**dass** eine erste und zweite Markierungsvorrichtung (520) eine Graustufenausgabe erzeugen;
der erste Satz von Tonstufenproben (212) ein oder mehrere Grautöne umfasst; und **dass**
der zweite Satz von Tonstufenproben (222) ein oder mehrere Grautöne umfasst.

13. Verfahren nach einem der Ansprüche 1 bis 12,
**dadurch gekennzeichnet,**
**dass** die erste und zweite Markierungsvorrichtung (520) eine Farbausgabe erzeugt

14. Verfahren nach Anspruch 13,
**dadurch gekennzeichnet,**
**dass** der erste Satz von Tonstufenproben (212) einen oder mehrere Töne einer Rot-Farbe umfasst, einen oder mehrere Töne einer Grün-Farbe und einen oder mehrere Töne einer Blau-Farbe; und dass
der zweite Satz von Tonstufenproben (222) einen oder mehrere Töne einer Rot-Farbe umfasst, einen oder mehrere Töne einer Grün-Farbe und einen oder mehrere Töne einer Blau-Farbe.

15. Verfahren nach Anspruch 13,
**dadurch gekennzeichnet,**
**dass** der erste Satz von Tonstufenproben (212) einen oder mehrere Töne einer Cyan-Farbe umfasst, einen oder mehrere Töne einer Gelb-Farbe, einen oder mehrere Töne einer Magenta-Farbe und einen oder mehrere Töne einer Schwarz-Farbe; und dass der zweite Satz von Tonstufenproben (222) einen oder mehrere Töne einer Cyan-Farbe umfasst, einen oder mehrere Töne einer Gelb-Farbe, einen oder mehrere Töne einer Magenta-Farbe und einen oder mehrere Töne einer Schwarz-Farbe.

16. Verfahren nach einem der Ansprüche 1 bus 11,
**dadurch gekennzeichnet,**
**dass** die erste und zweite Markierungsvorrichtung (520) Ausgaben mit einer oder mehreren Schmuckfarben erzeugt;
der erste Satz von Tonstufenproben (212) einen oder mehrere Töne jeder Schmuckfarbe umfasst; und dass
der zweite Satz von Tonstufenproben (222) einen oder mehrere Töne jeder Schmuckfarbe umfasst.

17. Verfahren nach einem der Ansprüche 1 bis 11,
**dadurch gekennzeichnet,**
**dass** die erste und zweite Markierungsvorrichtung (520) eine oder mehrere Zusatzfarbstationen umfasst, wobei jede Zusatzfarbstation in der Lage ist, Ausgaben mit einer zugehörigen Zusatzfarbe zu erzeugen;
der erste Satz von Tonstufenproben (212) einen oder mehrere Töne jeder Zusatzfarbe umfasst; und dass
der zweite Satz von Tonstufenproben (222) einen oder mehrere Töne jeder Zusatzfarbe umfasst.

18. Verfahren nach einem der Ansprüche 1 bis 17,
**dadurch gekennzeichnet,**
**dass** das Verfahren weiterhin folgenden Schritt umfasst:
Auswählen einer Client-Druckwarterschlange; und
Zuordnen der angepassten Tonübertragungsfunktion zur ausgewählten Druckwarteschlange.

19. Verfahren nach einem der Ansprüche 1 bis 18
**dadurch gekennzeichnet,**
**dass** das Verfahren eine Druckfarbe betrifft, sowie eines Satzes einer oder mehrerer Tonstufenproben (212) dieser Druckfarbe, sowie eines oder mehrerer Kalibriersollpunkte (310) dieser Druckfarbe.

20. Markierungssystem (500) zum weitgehenden Anpassen einer ersten von einer ersten Markierungsvorrichtung (520) erzeugten Ausgabe an eine zweite von einer zweiten Markierungsvorrichtung (520) erzeugten Ausgabe, wobei das Markierungssystem (500) folgendes umfasst:
einen optischen Sensor (530);
ein Bildverarbeitungssubsystem; und
eine der ersten Markierungsvorrichtung (520) zugeordnete Markierungseinheit (524),
wobei der optische Sensor (530) darauf ausgelegt ist, einen oder mehrere Kalibriersollpunkte (310) zu ermitteln, durch das Vergleichenlinies erster Satzes einer oder mehrerer Tonstufenproben (212), die von der ersten Markierungsvorrichtung (520) erzeugt wurden, mit einem zweiten Satz einer oder mehrerer Tonstufenproben (222), die von der zweiten Markierungsvorrichtung (520) erzeugt wurden,
wobei das Bildverarbeitungssubsystem darauf ausgelegt ist
ein Bild von einer Client-Anwendung (512) entgegenzunehmen;
eine angepasste Tonübertragungsfunktion gemäß der Kalibriersollpunkte (310) zu erstellen; und
das Bild mithilfe der angepassten Tonübertragungsfunktion zu verarbeiten, um einen gerasterter Pixelstrom (526) zu erzeugen; und
wobei das Bildverarbeitungssubsystem darauf ausgelegt ist, eine eingebettete Tonübertragungsfunktion, die einem in einer Seitenbeschreibungssprache codierten Bild (516) zugeordnet ist, das von der ersten Markierungsvorrichtung (520) zu erzeugen ist, außer Kraft zu setzen und
wobei die Markierungseinheit (524) darauf ausgelegt ist, den gerasterten Pixelstrom (526) entgegenzunehmen und die erste Ausgabe zu erzeugen.

21. Markierungssystem (500) nach Anspruch 20,
**dadurch gekennzeichnet,**
**dass** das Bildverarbeitungssubsystem einen Client-Gerätetreiber (514) umfasst der derauf ausgelegt ist, die angepasste Tonübertragungsfunktion zu erzeugen.

22. Markierungssystem (500) nach Anspruch 20,
**dadurch gekennzeichnet,**
**dass** das Bildverarbeitungssubsystem einen Rasterbildprozessor (522) umfasst, der darauf ausgelegt ist die angepasste Tonübertragungsfunktion zu erzeugen.

## Claims

1. A method of substantially matching a first output produced by a first marking device (520) with a second output produced by a second marking device (520), the method comprising the steps of:
producing a first set of one or more sample tone levels (212) using the first marking device (520);
producing a second set of one or more sample tone levels (222) using the second marking device (520);
comparing the first set of sample tone levels (212) with the second set of sample tone levels (222);
determining one or more calibration set points (310);
generating a custom tone transfer function associated with the first marking device (520) in accordance with the calibration set points (310);
overriding an embedded tone transfer function associated with an image (516) encoded in a page description language, said image to be produced on the first marking device (520);
using the custom tone transfer function to produce the first output (210) from the first marking device (520).

2. A method as in claim 1,
**characterized in that**
the marking device (520) is a printing device.

3. A method as in claims 1 and 2,
**characterized in that**
the first set of sample tone levels (212) consists of one or more halftones.

4. A method as in claims 1 to 3,
**characterized in that**
the step of comparing the first set of sample tone levels (212) with the second set of sample tone levels (222) is performed visually and/or using a densitometer and/or using a scanner.

5. A method as in claims 1 to 4,
**characterized in that**
the step determining the calibration set points (310) includes determining between 10 and 20 set points.

6. A method as in claims 1 to 5,
**characterized in that**
the step of generating the custom tone transfer function is performed in connection with a raster image processor (522).

7. A method as in claims 1 to 6,
**characterized in that**
the step of generating the custom tone transfer function is performed in connection with a client device driver (514).

8. A method as in claims 1 to 7,
**characterized in that**
the step of generating the custom tone transfer function includes modifying an existing tone transfer function.

9. A method as in claims 1 to 8,
**characterized in that**
the step of generating the custom tone transfer function includes linking the calibration set points (310) with one or more linear segments (312).

10. A method as in claims 1 to 9,
**characterized in that**
the step of generating the custom tone transfer function includes linking of calibration set points (310) to form a smooth function curve segment (412).

11. A method as in claims 1 to 10,
**characterized in that**
using the custom tone transfer function to produce the first sample output (210) from the marking device (520) further comprises the steps of:
reverse halftoning a raster image to divide the raster image into halftone cells; and
using the custom tone transfer function to adjust one or more halftone levels associated with the halftone cells.

12. A method as in claims 1 to 11,
**characterized in that**
the first and second marking devices (520) produce scaled gray output;
the first set of sample tone levels (212) includes one or more shades of gray; and that
the second set of sample tone levels (222) includes one or more shades of gray.

13. A method as in claims 1 to 12,
**characterized in that**
the first and second marking devices (520) produce color output.

14. A method as in claim 13,
**characterized in that**
the first set of sample tone levels (212) includes one or more shades of a red color, one or more shades of a green color, and one or more shades of a blue color; and that
the second set of sample tone levels (222) includes one or more shades of a red color, one or more shades of a green color, and one or more shades of a blue color.

15. A method as in claim 13,
**characterized in that**
the first set of sample tone levels (212) includes one or more shades of a cyan color, one or more shades of a yellow color, one or more shades of a magenta color, and one or more shades of a black color; and that
the second set of sample tone levels (222) includes one or more shades of a cyan color, one or more shades of a yellow color, one or more shades of a magenta color, and one or more shades of a black color.

16. A method as in claims 1 to 11,
**characterized in that**
the first and second marking devices (520) produce output with one or more accent colors;
the first set of sample tone levels (212) includes one or more shades of each of the accent colors; and that
the second set of sample tone levels (222) includes one or more shades of each of the accent colors.

17. A method as in claims 1 to 11,
**characterized in that**
the first and second marking devices (520) include one or more supplemental color stations, each of the supplemental color stations being capable of producing output including an associated supplemental color;
the first set of sample tone levels (212) includes one or more shades of each of the supplemental colors; and that
the second set of sample tone levels (222) includes one or more shades of each of the supplemental colors.

18. A method as in claims 1 to 17,
**characterized in that**
the method further comprises the steps of
selecting a client printer queue; and
associating the custom tone transfer function associated with the selected printer queue.

19. A method as in claims 1 to 18,
**characterized in that**
the method relates to a printing ink, as well as to a set of one or more custom tone levels (212) of this printing ink, as well as to one or more calibration set points (310) of this printing ink.

20. A marking system (500) capable of substantially matching a first output produced by a first marking device (520) with a second output produced by a second marking device (520), the marking system (500) comprising the following:
an optical sensor (530);
an image processing subsystem; and
a marking engine (524) associated with the first marking device (520);
wherein the optical sensor (530) is configured to determine one or more calibration set points (310) by comparing a first set of one or more sample tone levels (212) produced by the first marking device (520) with a second set of one or more sample tone levels (222) produced by the second marking device (520),
wherein the image processing subsystem is configured to
receive an image from the client application (512);
generate a custom tone transfer function in accordance with the calibration set points (310); and
process the image using the custom tone transfer function to create a rasterized pixel stream (526); and
wherein the image processing subsystem is configured to override the embedded tone transfer function which is associated with an image (516) coded in a page description language to be produced from the first marking device (520); and
wherein the marking engine (524) is configured to receive the rasterized pixel stream (526) and to produce the first output.

21. A marking system (500) as in claim 20,
**characterized in that**
the image processing subsystem includes a client device driver (514) which is configured to generate the custom tone transfer function.

22. A marking system (500) as in claim 20,
**characterized in that**
the image processing subsystem comprises a raster image processor (522) which is configured to generate the custom tone transfer function.

## Revendications

1. Procédé pour mettre largement en correspondance une première sortie générée par un premier dispositif de marquage (520) avec une deuxième sortie générée par un deuxième dispositif de marquage (520), ledit procédé comprenant les étapes suivantes :
génération d'un premier jeu d'un ou de plusieurs échantillons de gradations (212) avec le premier dispositif de marquage (520) ;
génération d'un deuxième jeu d'un ou de plusieurs échantillons de gradations (222) avec le deuxième dispositif de marquage (520) ;
comparaison entre le premier jeu d'échantillons de gradations (212) et le deuxième jeu d'échantillons de gradations (222) ;
définition d'un ou de plusieurs points nominaux de calibrage (310) ;
génération d'une fonction de transmission tonale mise en correspondance conformément aux points nominaux de calibrage (310) et attribution de cette fonction au premier dispositif de marquage (520) ;
désactivation d'une fonction intégrée de transmission tonale attribuée à une image (516) codée en un langage de description de page et générée par le premier dispositif de marquage (520).
utilisation de la fonction de transmission tonale mise en correspondance pour obtenir une première sortie (210) par le premier dispositif de marquage (520).

2. Procédé selon la revendication 1, **caractérisé en ce que** le dispositif de marquage (520) est une imprimante.

3. Procédé selon l'une quelconque des revendications 1 à 2, **caractérisé en ce que** le premier jeu d'échantillons de gradations (212) comprend une ou plusieurs gradations de trame.

4. Procédé selon l'une quelconque des revendications 1 à 3, **caractérisé en ce que** l'étape de comparaison comprend la comparaison entre le premier jeu d'échantillons de gradations (212) avec le deuxième jeu d'échantillons de gradations (222) par inspection visuelle et/ou par un densitomètre et/ou par un scanner.

5. Procédé selon l'une quelconque des revendications 1 à 4, **caractérisé en ce que** l'étape de définition des points nominaux de calibrage (310) comprend la définition entre 10 et 20 points nominaux.

6. Procédé selon l'une quelconque des revendications 1 à 5, **caractérisé en ce que** l'étape de génération de la fonction de transmission tonale mise en correspondance s'effectue en liaison avec un processeur d'images matricielles (522).

7. Procédé selon l'une quelconque des revendications 1 à 6, **caractérisé en ce que** l'étape de génération de la fonction de transmission tonale mise en correspondance s'effectue en liaison avec un gestionnaire de périphériques (514) du client.

8. Procédé selon l'une quelconque des revendications 1 à 7, **caractérisé en ce que** la génération d'une fonction de transmission tonale mise en correspondance comprend la modification d'une fonction de transmission tonale existante.

9. Procédé selon l'une quelconque des revendications 1 à 8, **caractérisé en ce que** la génération de la fonction de transmission tonale mise en correspondance comprend la liaison entre les points nominaux de calibrage (310) avec un ou plusieurs segments de ligne (312).

10. Procédé selon l'une quelconque des revendications 1 à 9, **caractérisé en ce que** la génération de la fonction de transmission tonale mise en correspondance comprend la liaison entre les points nominaux de calibrage (310) pour créer un segment de courbe lisse (412).

11. Procédé selon l'une quelconque des revendications 1 à 10, **caractérisé en ce que** l'utilisation de la fonction de transmission tonale mise en correspondance pour réaliser le premier échantillon de sortie (210) par le dispositif de marquage (520) comprend également les étapes suivantes :
le tramage inverse d'une image matricielle pour diviser l'image matricielle en cellules de trame ; et
l'utilisation de la fonction de transmission tonale mise en correspondance pour obtenir une harmonisation d'une ou de plusieurs gradations de trame attribuées aux cellules de trame.

12. Procédé selon l'une quelconque des revendications 1 à 11, **caractérisé en ce que** un premier et un deuxième dispositif de marquage (520) produisent une sortie en niveaux de gris ;
le premier jeu d'échantillons de gradations (212) comprend une ou plusieurs gradations de gris ; et
le deuxième jeu d'échantillons de gradations (222) comprend une ou plusieurs gradations de gris.

13. Procédé selon l'une quelconque des revendications 1 à 12, **caractérisé en ce que** le premier et le deuxième dispositif de marquage (520) produisent une sortie en couleur.

14. Procédé selon la revendication 13, **caractérisé en ce que** le premier jeu d'échantillons de gradations (212) comprend une ou plusieurs gradations d'une couleur rouge, une ou plusieurs gradations d'une couleur verte et une ou plusieurs gradations d'une couleur bleue ; et
le deuxième jeu d'échantillons de gradations (222) comprend une ou plusieurs gradations d'une couleur rouge, une ou plusieurs gradations d'une couleur verte et une ou plusieurs gradations d'une couleur bleue.

15. Procédé selon la revendication 13, **caractérisé en ce que** le premier jeu d'échantillons de gradations (212) comprend une ou plusieurs gradations d'une couleur cyan, une ou plusieurs gradations d'une couleur jaune, une ou plusieurs gradations d'une couleur magenta et une ou plusieurs gradations d'une couleur noire ; et
le deuxième jeu d'échantillons de gradations (222) comprend une ou plusieurs gradations d'une couleur cyan, une ou plusieurs gradations d'une couleur jaune, une ou plusieurs gradations d'une couleur magenta et une ou plusieurs gradations d'une couleur noire.

16. Procédé selon l'une quelconque des revendications 1 à 11, **caractérisé en ce que** le premier et le deuxième dispositif de marquage (520) produisent des sorties avec une ou plusieurs couleurs de décoration ;
le premier jeu d'échantillons de gradations (212) comprend une ou plusieurs gradations de chaque couleur de décoration ; et
le deuxième jeu d'échantillons de gradations (222) comprend une ou plusieurs gradations de chaque couleur de décoration.

17. Procédé selon l'une quelconque des revendications 1 à 11, **caractérisé en ce que** le premier et le deuxième dispositif de marquage (520) comprennent un ou plusieurs postes de couleur complémentaire, chaque poste de couleur complémentaire pouvant générer des sorties avec les couleurs complémentaires correspondantes ;
le premier jeu d'échantillons de gradations (212) comprend une ou plusieurs gradations de chaque couleur complémentaire ; et
le deuxième jeu d'échantillons de gradations (222) comprend une ou plusieurs gradations de chaque couleur complémentaire.

18. Procédé selon l'une quelconque des revendications 1 à 17, **caractérisé en ce que** le procédé comprend également les étapes suivantes :
sélection d'une file d'attente d'imprimante du client ; et
attribution de la fonction de transmission tonale mise en correspondance à la file d'attente sélectionnée de l'imprimante.

19. Procédé selon l'une quelconque des revendications 1 à 18, **caractérisé en ce que** le procédé concerne une encre d'imprimerie, ainsi qu'un jeu d'un ou de plusieurs échantillons de gradations (212) de cette encre d'imprimerie et un ou plusieurs points nominaux de calibrage (310) de cette encre d'imprimerie.

20. Système de marquage (500) pour mettre largement en correspondance une première sortie générée par un premier dispositif de marquage (520) avec une deuxième sortie générée par un deuxième dispositif de marquage (520), ledit système de marquage (500) comprenant :
- un capteur optique (530) ;
- un sous-système de traitement d'images ; et
- une unité de marquage (524) attribuée au premier dispositif de marquage (520), le capteur optique (530) étant conçu de façon à définir un ou plusieurs points nominaux de calibrage (310) par la comparaison entre un premier jeu d'un ou de plusieurs échantillons de gradations (212) généré par le premier dispositif de marquage (520) et un deuxième jeu d'un ou de plusieurs échantillons de gradations (222) généré par le deuxième dispositif de marquage (520), le sous-système de traitement d'images étant conçu pour :
- recevoir une image d'une application client (512) ;
- établir une fonction de transmission tonale mise en correspondance en fonction des points nominaux de calibrage (310) ; et
- traiter l'image à l'aide de la fonction de transmission tonale mise en correspondance pour générer un flux de pixels tramés (526) ; le sous-système de traitement d'images étant conçu de façon à désactiver une fonction intégrée de transmission tonale attribuée à une image (516) codée en un langage de description de page, et qui doit être générée par le premier dispositif de marquage (520) ; et
- l'unité de marquage (524) étant conçue de façon à recevoir le flux de pixels tramés (526) et générer la première sortie.

21. Système de marquage (500) selon la revendication 20, **caractérisé en ce que** le sous-système de traitement d'images comprend un gestionnaire de périphériques client (514) conçu de façon à établir la fonction de transmission tonale mise en correspondance.

22. Système de marquage (500) selon la revendication 20, **caractérisé en ce que** le sous-système de traitement d'images comprend un processeur d'images matricielles (522) conçu de façon à établir la fonction de transmission tonale mise en correspondance.
